# FASCICULE DE BREVET EUROPEEN

(11) **EP 4 638 930 B1**
(45) Date de publication et mention de la délivrance du brevet: **09.09.2026**
(21) Numéro de dépôt: 23841022.9
(22) Date de dépôt: 19.12.2023
(51) Int. Cl.: F02C 9/42, F02C 9/46

(54) **COMMANDE AUTOMATISÉE DES TURBOMACHINES D'UN AÉRONEF A VOILURE TOURNANTE LORS D'UNE PANNE SUR UNE TURBOMACHINE**
AUTOMATISIERTE STEUERUNG VON TURBINENMOTOREN EINES DREHFLÜGELFLUGZEUGS WÄHREND EINES DEFEKTS AN EINEM TURBINENMOTOR
AUTOMATED CONTROL OF TURBINE ENGINES OF A ROTARY-WING AIRCRAFT DURING A FAILURE ON A TURBINE ENGINE

(30) Priorité: 19.12.2022 FR 2213819
(43) Date de publication de la demande: 29.10.2025
(73) Titulaire: Safran Helicopter Engines, 64510 Bordes (FR)
(72) Inventeur: COURTIE, Philippe, Roger, 77550 MOISSY-CRAMAYEL (FR); RUPERT, Pascal, Jean, 77550 MOISSY-CRAMAYEL (FR)
(74) Mandataire: Cabinet Beau de Loménie
(86) Numéro de dépôt international: PCT/FR2023/052052
(87) Numéro de publication internationale: WO 2024/134086

(56) Documents cités:
- EP-A1- 3 627 271
- EP-A1- 3 951 150
- US-A- 3 963 372
- US-A1- 2020 361 620

## Description

### Domaine Technique

La présente invention se rapporte au domaine général des aéronefs comprenant au moins deux turbomachines, et plus particulièrement à une gestion de commande des turbomachines en cas de détection d'une panne sur une des turbomachines.

### Technique antérieure

En général, sur un aéronef bimoteur ou bien à plus de deux turbomachines, lorsqu'une panne apparaît sur une des turbomachines, le pilote est obligé d'engager une procédure manuelle. Cette procédure manuelle consiste à mettre au ralenti ou à arrêter le moteur présentant une panne pouvant l'endommager.

Cette procédure présente l'inconvénient d'augmenter la charge du pilote et de générer des erreurs conduisant à l'arrêt du moteur sain.

Ce type de procédure est décrit dans les manuels d'installation des moteurs installés sur des applications hélicoptères multi-moteurs par exemple. La procédure pourrait se résumer ainsi : « en cas de panne pouvant endommager le moteur (basse pression d'huile, limaille, niveau huile bas, colmatage filtre), il est recommandé de mettre le moteur immédiatement au ralenti ou de l'arrêter ».

Le document US 3,963,372 décrit un procédé connu relevant de l'état de la technique.

### Exposé de l'invention

A cet effet, la présente invention vise à améliorer la sécurité des vols en réduisant la charge pilote et notamment en évitant le recours à des sélecteurs, sources d'erreurs potentielles du pilote.

Dans un objet de l'invention, il est proposé un procédé de commande automatisée des turbomachines d'un aéronef à voilure tournante doté d'une pluralité de turbomachines lors d'une panne sur une turbomachine, le procédé étant destiné à être mis en œuvre par une unité électronique de commande configurée pour recevoir une consigne de régime de rotation de la voilure tournante.

Selon une caractéristique technique de l'invention, à la suite d'une détection d'une panne sur une première turbomachine parmi les turbomachines de l'aéronef à voilure tournante, le procédé de commande automatisée comprend :
- une détermination de la phase de vol dans laquelle se trouve l'aéronef, puis, lorsque l'aéronef est dans une autre phase qu'une phase de décollage,
- une activation d'un fonctionnement des turbomachines dans un mode désaligné via une commande d'une baisse progressive de la puissance de ladite première turbomachine et une commande d'une augmentation progressive de la puissance d'au moins une seconde turbomachine de l'aéronef, la baisse progressive de puissance de la première turbomachine et l'augmentation progressive de puissance de ladite au moins une seconde turbomachine étant commandée de manière complémentaire pour maintenir le régime de rotation de la voilure tournante à la consigne de régime de rotation de la voilure tournante,
- une activation d'un indicateur, pour le pilote, d'une anomalie moteur relative à la panne détectée, invitant le pilote à l'utilisation d'un pilotage prudent, et
- un armement d'un limiteur de puissance configuré pour limiter la puissance des turbomachines de l'aéronef à un premier seuil de puissance maximale disponible (OEIH) correspondant à une puissance maximale utilisable par une turbomachine pendant une première durée limitée.

La consigne de régime de voilure tournante correspond à la vitesse de rotation de la voilure tournante souhaitée et provient généralement de l'avionique qui la transmet au système de contrôle, c'est-à-dire l'unité électronique de commande.

L'invention permet ainsi une gestion totalement automatique de cas de pannes moteur, réduisant la charge pilote et limitant les risques d'erreurs et conciliant à la fois disponibilité de puissance, réduction de sollicitation du moteur en panne et limitation d'incursion dans des régimes de puissance d'urgence des moteurs sains. Lors d'un fonctionnement avec une turbomachine en panne, on qualifie les régimes de puissance d'urgence (OEIH, OEIL, OEIC) c'est-à-dire les régimes au-delà d'un certain seuil, par régimes OEI pour « One Engine Inoperative » en anglais. Plus en détails, il existe le régime OEIH pour un régime haut ou « high » en anglais, le régime OEIL pour un régime bas ou « low » en anglais, et le régime OEIC pour un régime continu. Par exemple, le régime OEIH peut être un régime accessible pendant 30 secondes alors que le régime ŒIL est un régime accessible pendant 2 minutes, et que le régime OEIC est accessible en continu, le régime OEIH étant plus élevé que le régime OEIL lui-même étant plus élevé que le régime OEIC.

En effet, le procédé selon l'invention améliore la sécurité des vols lors d'une panne d'une turbomachine grâce à une gestion automatique de la réduction de puissance sur le moteur en panne, afin de réduire son endommagement tout en privilégiant la disponibilité de puissance, et en limitant les incursions dans les régimes OEI des autres moteurs, afin d'éviter des opérations de maintenance lourdes.

Le procédé mis en œuvre par un système automatisé permet de diminuer la charge pilote et les risques de mauvaise décision (arrêt du moteur sain notamment), tout en conservant « l'esprit » des préconisations usuelles (habitudes pilotes). Ce système automatisé s'active lorsque des pannes pouvant conduire à un endommagement du moteur sont détectées et portées à la connaissance du système. Typiquement il s'agît de pannes sur le circuit huile. Le système gère alors automatiquement la réduction de puissance sur le moteur en panne afin de limiter l'endommagement et compense automatiquement par les autres moteurs.

Le procédé de l'invention a pour principe de base de remplacer la gestion par le pilote d'une situation de pannes moteur par une gestion totalement automatisée par une unité de commande électronique de contrôle et de surveillance du moteur. Ceci concerne notamment les cas de pannes sur le système huile et offre une gestion automatique assurant à la fois la disponibilité de puissance, une sollicitation réduite du moteur en panne et la limitation d'incursion en régime OEI des autres moteurs. Ainsi, l'invention proposée vise à réduire la charge pilote mais en conservant les grands principes de la gestion initialement faite lorsque ces fonctions étaient réalisées manuellement par les pilotes.

Dans un premier mode de mise en œuvre du procédé selon l'invention, une phase de décollage est détectée lorsque la puissance délivrée par au moins une turbomachine est supérieure à un seuil de puissance maximale continue.

Dans un deuxième mode de mise en œuvre du procédé selon l'invention, le procédé peut comprendre en outre, avant l'activation d'un fonctionnement des turbomachines dans un mode désaligné, une vérification de l'état de fonctionnement de toutes les turbomachines, le mode désaligné étant maintenu inactif si une panne impactant le fonctionnement nominal d'au moins une turbomachine est également détectée sur au moins une des turbomachines.

Lors d'un fonctionnement nominal d'une turbomachine, la sécurité de la turbomachine est assurée, et il n'existe aucun risque que son intégrité soit touchée.

Par l'expression une panne impactant le fonctionnement nominal, on entend une panne ne permettant pas d'assurer un fonctionnement d'une turbomachine de l'aéronef en toute sécurité pour la turbomachine. Une panne impactant le fonctionnement nominal d'une turbomachine peut être une panne de capteurs ou d'actionneurs par exemple.

Dans un troisième mode de mise en œuvre du procédé selon l'invention, la baisse progressive de la puissance de ladite première turbomachine et l'augmentation progressive de la puissance d'au moins une seconde turbomachine de l'aéronef sont réalisées jusqu'à ce que la puissance de la première turbomachine atteigne une limite basse de puissance, la puissance de ladite au moins une seconde turbomachine restant inférieure à un second seuil de puissance maximale disponible (OEIL), ou bien jusqu'à ce que la puissance de ladite au moins une seconde turbomachine atteigne le second seuil de puissance maximale disponible (OEIL), la puissance de ladite première turbomachine ayant une valeur supérieure à ladite limite de puissance basse de la première turbomachine.

Dans un quatrième mode de mise en œuvre du procédé selon l'invention, si, suite à l'activation de fonctionnement des turbomachines dans un mode désaligné, un pilote émet une requête d'augmentation de puissance, le procédé comprend une commande d'augmentation de la puissance de ladite au moins une seconde turbomachine jusqu'à, au maximum, un deuxième seuil de puissance maximale disponible (OEIL), et, si l'augmentation de la puissance de ladite au moins une seconde turbomachine est insuffisante pour que les turbomachines développent au total la puissance requise par le pilote, une commande d'augmentation de la puissance de ladite première turbomachine jusqu'à, au maximum, le deuxième seuil de puissance maximale disponible (OEIL), l'augmentation de puissance sur ladite au moins une seconde turbomachine et, si besoin, sur ladite première turbomachine étant réalisée pendant une durée limitée.

Néanmoins si la consigne de vitesse de la voilure tournante ne peut pas être ainsi atteinte, l'augmentation de puissance sur les turbomachines reste possible jusqu'au premier seuil de puissance maximale disponible (OEIH).

Dans un cinquième mode de mise en œuvre du procédé selon l'invention, le pilote commande un armement d'un limiteur de puissance pour limiter la puissance des turbomachines de l'aéronef à un deuxième seuil de puissance maximale disponible (OEIL) correspondant à une puissance maximale utilisable par une turbomachine pendant une seconde durée limitée supérieure à la première durée limitée, le deuxième seuil de puissance maximale disponible (OEIL) étant inférieur au premier seuil de puissance maximale disponible (OEIH).

Dans un sixième mode de mise en œuvre du procédé selon l'invention, si, suite à l'activation de fonctionnement des turbomachines dans un mode désaligné, un pilote émet une requête d'augmentation de puissance, le procédé comprend une commande d'augmentation de la puissance de ladite au moins une seconde turbomachine jusqu' à, au maximum, un troisième seuil de puissance maximale disponible (OEIC) inférieur au deuxième seuil de puissance maximale disponible (OEIL), et, si l'augmentation de la puissance de ladite au moins une seconde turbomachine est insuffisante pour que les turbomachines développent au total la puissance requise par le pilote, une commande d'augmentation de la puissance de ladite première turbomachine jusqu'à, au maximum, le troisième seuil de puissance maximale disponible (OEIC), l'augmentation de puissance sur ladite au moins une seconde turbomachine et, si besoin, sur ladite première turbomachine pouvant être réalisée pendant une durée illimitée.

Néanmoins si la consigne de vitesse de la voilure tournante ne peut pas être ainsi atteinte, l'augmentation de puissance sur les turbomachines reste possible jusqu'au second seuil de puissance maximale disponible (OEIL).

Selon un autre objet de l'invention, il est proposé une unité de commande électronique pour un aéronef à voilure tournante doté d'une pluralité de turbomachines, l'unité de commande électronique étant configurée pour recevoir une consigne de régime de rotation de la voilure tournante et commander de manière automatisée les turbomachines de l'aéronef lors d'une panne sur une turbomachine, l'unité de commande électronique comprenant :
- un module d'entrée configuré pour recevoir des signaux de détection d'une panne sur une première turbomachine parmi les turbomachines de l'aéronef à voilure tournante,
- un moyen de détermination de la phase de vol dans laquelle se trouve l'aéronef,
- un moyen d'activation d'un fonctionnement des turbomachines dans un mode désaligné configuré pour délivrer, lorsque l'aéronef est dans une autre phase qu'une phase de décollage, une commande d'une baisse progressive de la puissance de ladite première turbomachine et une commande d'une augmentation progressive de la puissance d'au moins une seconde turbomachine de l'aéronef, la baisse progressive de puissance de la première turbomachine et l'augmentation progressive de puissance de ladite au moins une seconde turbomachine étant commandée de manière complémentaire pour maintenir le régime de rotation de la voilure tournante au régime de rotation à la consigne de régime de rotation de la voilure tournante, et
- un moyen d'activation d'un indicateur d'une anomalie moteur pour le pilote l'invitant à l'utilisation d'un pilotage prudent, et
- un moyen d'armement d'un limiteur de puissance configuré pour limiter la puissance des turbomachines de l'aéronef au moins à un premier seuil de puissance maximale disponible (OEIH) correspondant à une puissance maximale utilisable par une turbomachine pendant une première durée limitée.

La consigne de régime de voilure tournante correspond à la vitesse de rotation de la voilure tournante souhaitée et provient généralement de l'avionique qui la transmet au système de contrôle, c'est-à-dire l'unité électronique de commande.

Selon un autre objet de l'invention, il est proposé un aéronef à voilure tournante comprenant au moins deux turbomachines et une unité de commande électronique.

### Brève description des dessins

[Fig. 1] La figure 1 illustre un procédé de commande automatisée des turbomachines d'un aéronef à voilure tournante lors d'une panne sur une turbomachine selon un mode de mise en œuvre.
[Fig. 2] La figure 2 illustre un procédé de commande automatisée des turbomachines d'un aéronef à voilure tournante lors d'une panne sur une turbomachine selon un deuxième mode de mise en œuvre.
[Fig. 3] La figure 3 illustre un procédé de commande automatisée des turbomachines d'un aéronef à voilure tournante lors d'une panne sur une turbomachine selon un troisième mode de mise en œuvre de l'invention.
[Fig. 4] La figure 4 présente de manière schématique une unité de commande électronique selon un mode de réalisation de l'invention.
[Fig. 5] La figure 5 représente graphiquement l'évolution des régimes des deux turbomachines d'un aéronef lorsque le procédé de la figure 1 est mis en œuvre.
[Fig. 6] La figure 6 représente graphiquement l'évolution des régimes des deux turbomachines d'un aéronef lorsque le procédé de la figure 1 est mis en œuvre alors que l'aéronef est en phase de décollage lorsqu'une panne est détectée.
[Fig. 7] La figure 7 représente graphiquement l'évolution des régimes des deux turbomachines d'un aéronef lorsque le procédé de la figure 2 est mis en œuvre.

### Description des modes de réalisation

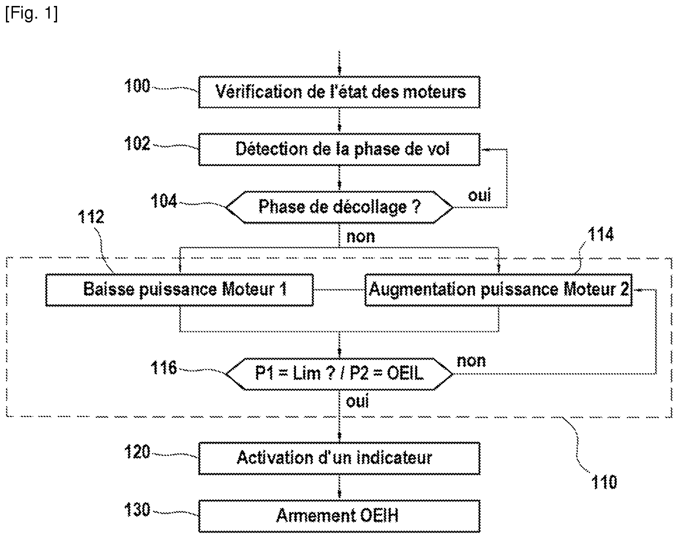

Sur la figure 1 est illustré un ordinogramme d'un procédé de commande automatisée des turbomachines d'un aéronef à voilure tournante lors d'une panne sur une turbomachine selon un mode de mise en œuvre de l'invention, le procédé étant destiné à être mis en œuvre par une unité électronique de commande.

L'aéronef comportant une unité de commande électronique mettant en œuvre un tel procédé est un aéronef à voilure tournante, tel qu'un hélicoptère, comprenant au moins deux turbomachines pour le fonctionnement de la voilure tournante.

Dans les exemples illustrés sur les figures 1 à 7, on se place dans une configuration avec seulement deux turbomachines. Mais l'invention s'applique également s'il y a plus d'une seconde turbomachine, la première turbomachine étant la turbomachine en panne.

Le procédé de commande automatisé selon l'invention est mis en œuvre à la suite d'une détection d'une panne sur une première turbomachine de l'aéronef. La panne peut correspondre, par exemple, à un défaut de pression d'huile ou une température d'huile trop élevée, ou d'autres pannes du même niveau d'importance, autrement dit des pannes n'impliquant pas un arrêt du fonctionnement de la turbomachine, mais nécessitant cependant un fonctionnement de la turbomachine dans un mode dégradé pour préserver son intégrité. Ces pannes peuvent effectivement générer un endommagement de la turbomachine si un fonctionnement de la turbomachine est maintenu dans des conditions de fonctionnement trop contraignantes.

Suite à la détection d'un défaut de pression d'huile par exemple, le procédé de commande automatisée selon l'invention illustré sur la figure 1 comprend tout d'abord, dans une première étape 100, une vérification de l'état de fonctionnement de toutes les turbomachines de l'aéronef. Si une panne impactant le fonctionnement nominal est détectée sur au moins une des turbomachines, le procédé selon l'invention est avorté, sinon on passe à l'étape suivante 102.

Puis dans une étape suivante 102, le procédé comprend une détermination de la phase de vol dans laquelle se trouve l'aéronef.

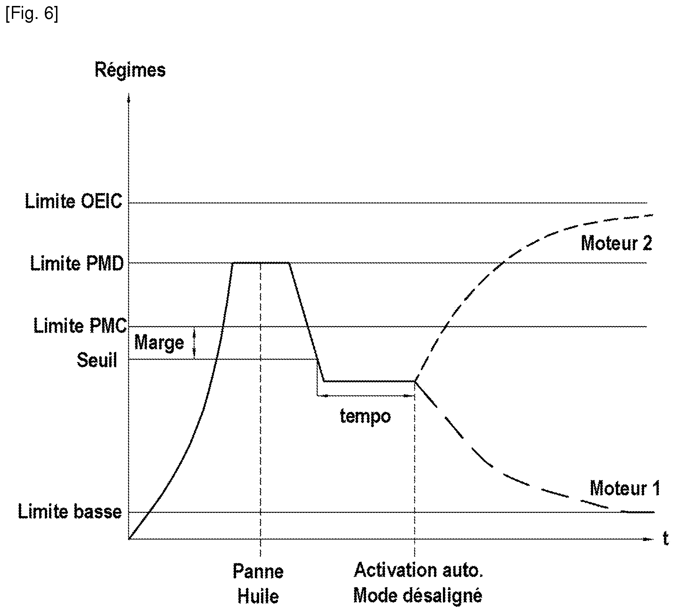

Si une phase de décollage est détectée à la première étape 102, notamment par une détection d'une puissance délivrée par au moins une turbomachine supérieure à un seuil de puissance maximale continue, les étapes suivantes du procédé ne sont pas mises en œuvre. Cela jusqu'à la sortie de la phase de décollage, comme indiqué à l'étape 104, et comme cela est illustré sur la figure 6 qui sera décrite plus loin.

Lorsque l'aéronef est dans une autre phase qu'une phase de décollage, le procédé selon l'invention réalise, dans une étape 110, une activation d'un fonctionnement des turbomachines dans un mode désaligné, et, dans le même temps, dans une étape 120, une activation d'un indicateur, pour le pilote, de l'activation du mode désaligné, invitant le pilote à l'utilisation d'un pilotage prudent.

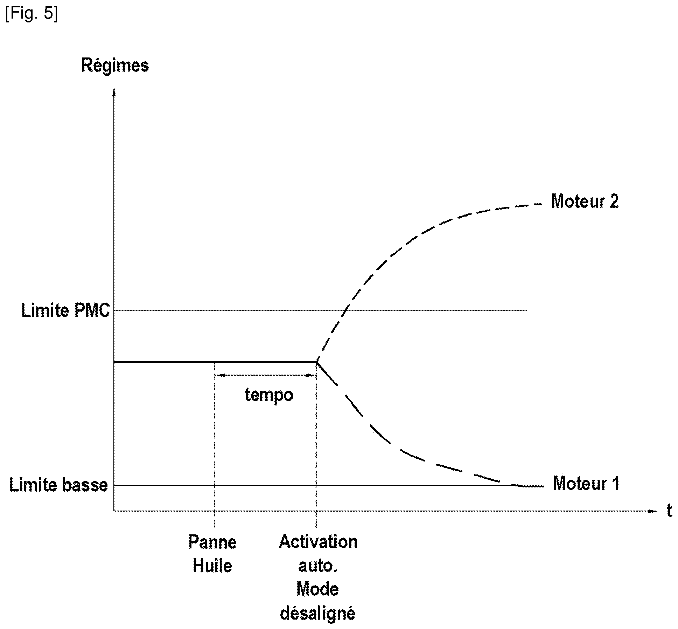

Comme cela est illustré sur la figure 5 qui représente graphiquement l'évolution des régimes des deux turbomachines d'un aéronef lorsque le procédé de la figure 1 est mis en œuvre, une temporisation est utilisée entre la détection du défaut de pression d'huile et l'activation du mode désaligné à l'étape 110. Cette temporisation est utilisée afin de s'assurer que l'aéronef ne se trouve pas dans une phase de décollage bien que le régime de puissance des turbomachines soit inférieur au régime de puissance maximum continu (PMC), qui représente le seuil bas de la plage de puissance maximale de décollage (PMD)

Sur la figure 6 est représentée graphiquement l'évolution des régimes des deux turbomachines d'un aéronef lorsque le procédé de la figure 1 est mis en œuvre alors que l'aéronef est en phase de décollage lorsqu'une panne est détectée. Sur cette figure 6, la panne est détectée alors que le régime de puissance des turbomachines est dans la plage PMD. Le procédé de la figure 1 n'est pas activé comme indiqué à l'étape 104. Il faut attendre que le pilote commande une diminution du régime de puissance des turbomachines sous une valeur seuil pour que la temporisation soit lancée et que le mode désaligné soit activé automatiquement à l'issue de la temporisation si le régime est toujours inférieur à ce seuil.

Le seuil en question correspond à un régime de puissance des turbomachines strictement inférieur à la limite associée au niveau de puissance maximum continu (PMC) de l'aéronef. Par sécurité, on prend une marge de quelques pourcents inférieur au niveau PMC pour fixer ce seuil.

Comme cela est illustré sur les figures 5 et 6, et sur la figure 1, l'étape 110 d'activation d'un fonctionnement des turbomachines dans un mode désaligne comprend, dans une étape 112, une commande d'une baisse progressive de la puissance de la première turbomachine, Moteur 1, et, dans une étape 114 simultanée à l'étape 112, une commande d'une augmentation progressive de la puissance de la seconde turbomachine, Moteur 2.

Dans le même temps, dans une étape 130 à la suite de l'étape 110, l'unité électronique de commande réalise un armement d'un limiteur de puissance configuré pour limiter la puissance des turbomachines (Moteur 1 et Moteur 2) de l'aéronef à un premier seuil de puissance maximale disponible, dit seuil de puissance maximale haut (OEIH) et correspondant à une puissance maximale utilisable par une turbomachine pendant une première durée limitée.

La baisse progressive de puissance de la première turbomachine et l'augmentation progressive de puissance de la seconde turbomachine sont commandées de manière complémentaire pour maintenir le régime de rotation de la voilure tournante au régime de rotation à une consigne de régime de rotation de la voilure tournante.

Comme indiqué à l'étape 116 sur la figure 1, la baisse progressive de la puissance de la première turbomachine et l'augmentation progressive de la puissance de la seconde turbomachine sont réalisées :
- soit jusqu'à ce que la puissance de la première turbomachine (notée P1 sur la figure 1) atteigne une limite basse de puissance de la première turbomachine (notée Lim sur la figure 1 et limite basse sur les figures 5 et 6), la puissance de la seconde turbomachine restant inférieure à un second seuil de puissance maximale disponible (OEIL),
- soit jusqu'à ce que la puissance de la seconde turbomachine (notée P2 sur la figure 1) atteigne le second seuil de puissance maximale disponible (noté OEIL sur la figure 1), la puissance de la première turbomachine ayant alors une valeur supérieure à la limite de puissance basse de la première turbomachine.

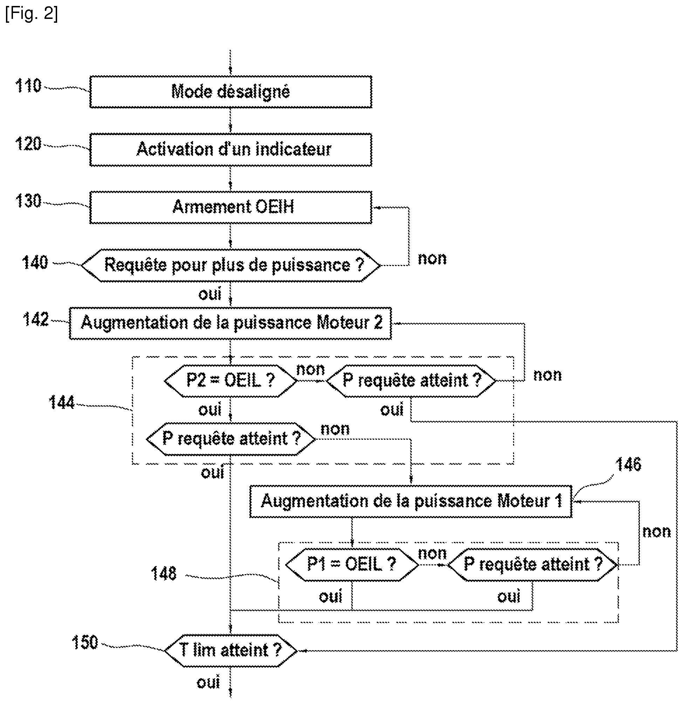

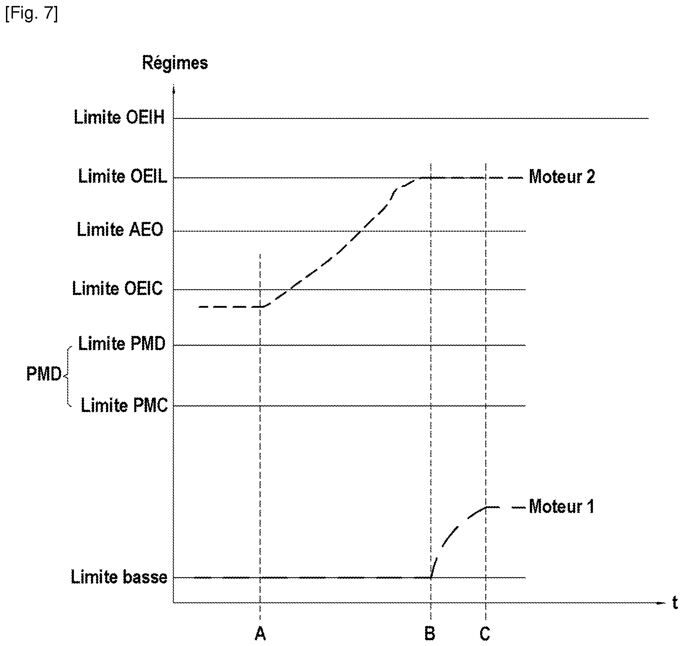

Sur la figure 2 il est illustré un procédé selon un deuxième mode de mise en œuvre de l'invention. Et sur la figure 7 est représentée graphiquement l'évolution des régimes des deux turbomachines d'un aéronef lorsque le procédé de la figure 2 est mis en œuvre.

Comme illustré sur la figure 2, si, suite à l'activation de fonctionnement des turbomachines dans un mode désaligné, un pilote émet, dans une étape 140 (notée A sur la figure 7), une requête d'augmentation de puissance, le procédé comprend en outre, dans une étape 142, une commande d'augmentation de la puissance de la seconde turbomachine (Moteur 2) jusqu'à, au maximum, le deuxième seuil de puissance maximale disponible (OEIL), comme indiqué dans l'étape 144. Et, si l'augmentation de la puissance de la seconde turbomachine est insuffisante pour que les turbomachines développent au total (noté P sur la figure 2) la puissance requise par le pilote, le procédé comprend en outre une augmentation, dans une étape 146 (notée B sur la figure 7), de la puissance de la première turbomachine (Moteur 1) jusqu'à, au maximum, le deuxième seuil de puissance maximale disponible (OEIL), comme indiqué à l'étape 148 de la figure 2. Sur la figure 7, la puissance totale requise par le pilote développée par les deux moteurs est atteinte à l'étape C. L'augmentation de puissance sur la seconde turbomachine et, si besoin, sur la première turbomachine étant réalisée pendant une durée limitée comme indiqué à l'étape 150.

Néanmoins si la consigne de vitesse de la voilure tournante ne peut pas être ainsi atteinte, l'augmentation de puissance sur les turbomachines reste possible jusqu'au premier seuil de puissance maximale disponible (OEIH).

Sur la figure 7, le niveau de régime AEO correspond au niveau de fonctionnement classique des deux turbomachines (AEO).

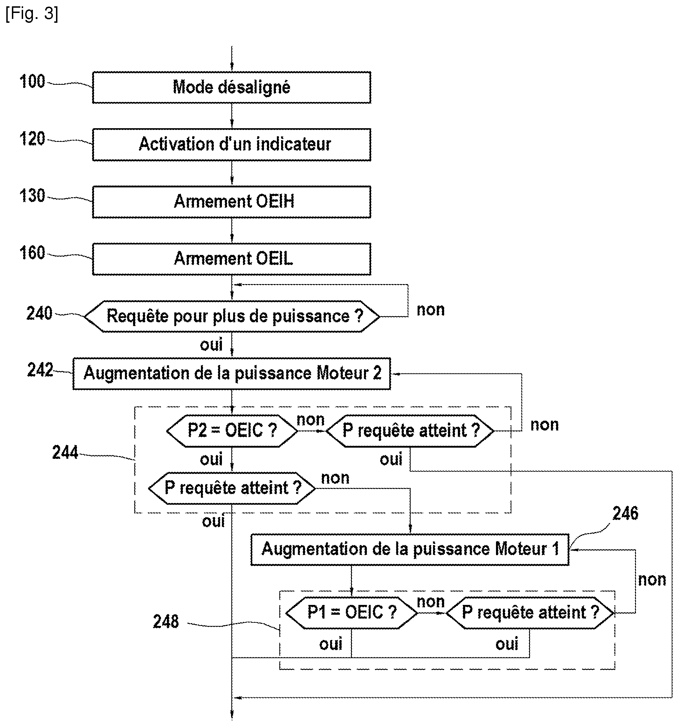

Sur la figure 3 est illustré un procédé selon un troisième mode de mise en œuvre de l'invention.

Comme illustré sur la figure 3, le pilote peut commander, dans une étape 160, un armement d'un limiteur de puissance pour limiter la puissance des turbomachines de l'aéronef à un deuxième seuil de puissance maximale disponible (OEIL) correspondant à une puissance maximale utilisable par une turbomachine pendant une seconde durée limitée supérieure à la première durée limitée, le deuxième seuil de puissance maximale disponible (OEIL) étant inférieur au premier seuil de puissance maximale disponible (OEIH).

Dans un tel cas, si, suite à l'activation de fonctionnement des turbomachines dans un mode désaligné, un pilote émet, dans une étape 240, une requête d'augmentation de puissance, le procédé comprend en outre, dans une étape 242, une commande d'augmentation de la puissance de ladite au moins une seconde turbomachine jusqu' à, au maximum, un troisième seuil de puissance maximale disponible (OEIC) inférieur au deuxième seuil de puissance maximale disponible (OEIL), comme indiqué dans l'étape 144. Et, si l'augmentation de la puissance de ladite au moins une seconde turbomachine est insuffisante pour que les turbomachines développent au total la puissance requise par le pilote, le procédé comprend en outre une augmentation, dans l'étape 246, de la puissance de ladite première turbomachine jusqu'à, au maximum, le troisième seuil de puissance maximale disponible (OEIC), comme indiqué dans l'étape 248.

Dans cette configuration, l'augmentation de puissance sur la seconde turbomachine et, si besoin, sur ladite première turbomachine peuvent être réalisées sans limite de temps.

Néanmoins si la consigne de vitesse de la voilure tournante ne peut pas être ainsi atteinte, l'augmentation de puissance sur les turbomachines reste possible jusqu'au second seuil de puissance maximale disponible (OEIL).

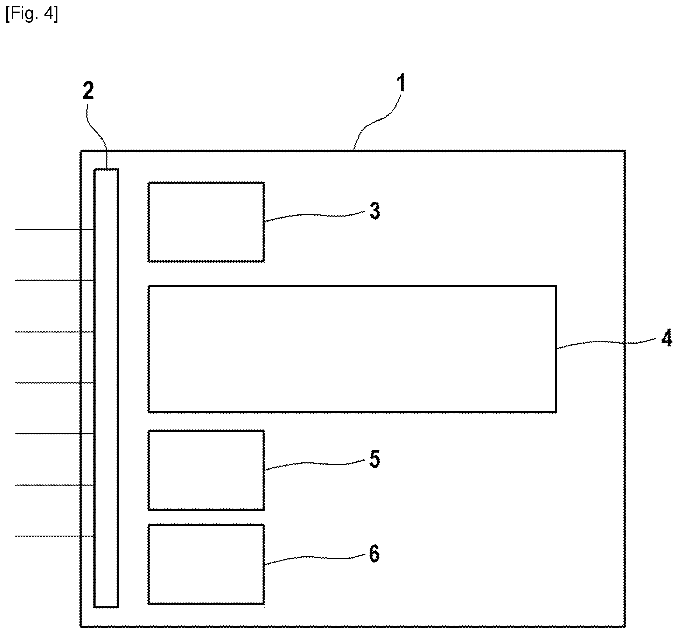

Sur la figure 4 est illustrée schématique une unité de commande électronique selon un mode de réalisation de l'invention.

L'unité de commande électronique 1 est configurée pour commander de manière automatisée les turbomachines d'un aéronef à voilure tournante pluri moteurs lors d'une panne sur une turbomachine.

L'unité de commande électronique 1 comprend un module d'entrée 2 configuré pour recevoir des signaux de détection d'une panne sur une première turbomachine parmi les turbomachines de l'aéronef à voilure tournante, un moyen 3 de détermination de la phase de vol dans laquelle se trouve l'aéronef, et un moyen 4 d'activation d'un fonctionnement des turbomachines dans un mode désaligné. Le moyen 4 d'activation d'un fonctionnement des turbomachines dans un mode désaligné est configuré pour délivrer, lorsque l'aéronef est dans une autre phase qu'une phase de décollage, une commande d'une baisse progressive de la puissance de ladite première turbomachine et une commande d'une augmentation progressive de la puissance d'au moins une seconde turbomachine de l'aéronef. La baisse progressive de puissance de la première turbomachine et l'augmentation progressive de puissance de ladite au moins une seconde turbomachine sont commandées de manière complémentaire pour maintenir le régime de rotation de la voilure tournante au régime de rotation à la consigne de régime de rotation de la voilure tournante.

L'unité de commande électronique comprend en outre un moyen 5 d'activation d'un indicateur d'une anomalie moteur pour le pilote l'invitant à l'utilisation d'un pilotage prudent, et un moyen 6 d'armement d'un limiteur de puissance permettant de sélectionner soit le second seuil de puissance maximale disponible (OEIL) soit le troisième seuil de puissance maximale disponible (OEIC) soit de revenir au premier seuil de puissance maximale disponible (OEIH) préalablement automatiquement sélectionné suite à l'entrée en mode désaligné.

Le procédé selon l'invention fournit ainsi une solution technique permettant d'améliorer la sécurité des vols en réduisant la charge pilote et notamment en évitant le recours à des sélecteurs, sources d'erreurs potentielles du pilote.

## Revendications

1. Procédé de commande automatisée des turbomachines d'un aéronef à voilure tournante doté d'une pluralité de turbomachines lors d'une panne sur une turbomachine, le procédé étant destiné à être mis en œuvre par une unité électronique de commande configurée pour recevoir une consigne de régime de rotation de la voilure tournante, **caractérisé en ce que**, à la suite d'une détection d'une panne sur une première turbomachine parmi les turbomachines de l'aéronef à voilure tournante, le procédé de commande automatisée comprend :
- une détermination (102) de la phase de vol dans laquelle se trouve l'aéronef, puis, lorsque l'aéronef est dans une autre phase qu'une phase de décollage,
- une activation (110) d'un fonctionnement des turbomachines dans un mode désaligné via une commande (112) d'une baisse progressive de la puissance de ladite première turbomachine et une commande (114) d'une augmentation progressive de la puissance d'au moins une seconde turbomachine de l'aéronef, la baisse progressive de puissance de la première turbomachine et l'augmentation progressive de puissance de ladite au moins une seconde turbomachine étant commandées de manière complémentaire pour maintenir le régime de rotation de la voilure tournante à la consigne de régime de rotation de la voilure tournante,
- une activation (120) d'un indicateur, pour le pilote, d'une anomalie moteur relative à la panne détectée l'invitant à l'utilisation d'un pilotage prudent, et
- un armement (130) d'un limiteur de puissance configuré pour limiter la puissance des turbomachines de l'aéronef à un premier seuil de puissance maximale disponible (OEIH) correspondant à une puissance maximale utilisable par une turbomachine pendant une première durée limitée.

2. Procédé de commande automatisée selon la revendication 1, dans lequel une phase de décollage est détectée lorsque la puissance délivrée par au moins une turbomachine est supérieure à un seuil de puissance maximale continue.

3. Procédé de commande automatisée selon l'une des revendications 1 ou 2, comprenant en outre, avant l'activation d'un fonctionnement des turbomachines dans un mode désaligné, une vérification (100) de l'état de fonctionnement de toutes turbomachines, le mode désaligné étant maintenu inactif si une panne impactant le fonctionnement nominal d'au moins une turbomachine est détectée.

4. Procédé de commande automatisée selon l'une des revendications 1 à 3, dans lequel la baisse progressive de la puissance de ladite première turbomachine et l'augmentation progressive de la puissance d'au moins une seconde turbomachine de l'aéronef sont réalisées jusqu'à ce que la puissance de la première turbomachine atteigne (116) une limite basse de puissance, la puissance de ladite au moins une seconde turbomachine restant inférieure à un second seuil de puissance maximale disponible (OEIL), ou bien jusqu'à ce que la puissance de ladite au moins une seconde turbomachine atteigne le second seuil de puissance maximale disponible (OEIL), la puissance de ladite première turbomachine ayant une valeur supérieure à ladite limite de puissance basse de la première turbomachine.

5. Procédé de commande automatisée selon l'une des revendications 1 à 4, dans lequel si, suite à l'activation de fonctionnement des turbomachines dans un mode désaligné, un pilote émet une requête d'augmentation de puissance (140), le procédé comprend une commande (142) d'augmentation de la puissance de ladite au moins une seconde turbomachine jusqu'à, au maximum, un deuxième seuil de puissance maximale disponible (OEIL), et, si l'augmentation de la puissance de ladite au moins une seconde turbomachine est insuffisante pour que les turbomachines développent au total la puissance requise par le pilote, une commande d'augmentation (146) de la puissance de ladite première turbomachine jusqu'à, au maximum, le deuxième seuil de puissance maximale disponible (OEIL), l'augmentation de puissance sur ladite au moins une seconde turbomachine et, si besoin, sur ladite première turbomachine étant réalisée pendant une durée limitée (150).

6. Procédé de commande automatisée selon l'une des revendications 4 ou 5, dans lequel le pilote commande un armement (160) d'un limiteur de puissance pour limiter la puissance des turbomachines de l'aéronef à un deuxième seuil de puissance maximale disponible (OEIL) correspondant à une puissance maximale utilisable par une turbomachine pendant une seconde durée limitée supérieure à la première durée limitée, le deuxième seuil de puissance maximale disponible (OEIL) étant inférieur au premier seuil de puissance maximale disponible (OEIH).

7. Procédé de commande automatisée selon la revendication 6, dans lequel si, suite à l'activation de fonctionnement des turbomachines dans un mode désaligné, un pilote émet une requête (240) d'augmentation de puissance, le procédé comprend une commande (242) d'augmentation de la puissance de ladite au moins une seconde turbomachine jusqu'à, au maximum, un troisième seuil de puissance maximale disponible (OEIC) inférieur au deuxième seuil de puissance maximale disponible (OEIL), et, si l'augmentation de la puissance de ladite au moins une seconde turbomachine est insuffisante pour que les turbomachines développent au total la puissance requise par le pilote, une commande (246) d'augmentation de la puissance de ladite première turbomachine jusqu'à, au maximum, le troisième seuil de puissance maximale disponible (OEIC), l'augmentation de puissance sur ladite au moins une seconde turbomachine et, si besoin, sur ladite première turbomachine pouvant être réalisée pendant une durée illimitée.

8. Unité de commande électronique (1) pour un aéronef à voilure tournante doté d'une pluralité de turbomachines, l'unité de commande électronique (1) étant configurée pour recevoir une consigne de régime de rotation de la voilure tournante et commander de manière automatisée les turbomachines de l'aéronef lors d'une panne sur une turbomachine, l'unité de commande électronique (1) comprenant :
- un module (2) d'entrée configuré pour recevoir des signaux de détection d'une panne sur une première turbomachine parmi les turbomachines de l'aéronef à voilure tournante,
- un moyen (3) de détermination de la phase de vol dans laquelle se trouve l'aéronef,
- un moyen (4) d'activation d'un fonctionnement des turbomachines dans un mode désaligné configuré pour délivrer, lorsque l'aéronef est dans une autre phase qu'une phase de décollage, une commande d'une baisse progressive de la puissance de ladite première turbomachine et une commande d'une augmentation progressive de la puissance d'au moins une seconde turbomachine de l'aéronef, la baisse progressive de puissance de la première turbomachine et l'augmentation progressive de puissance de ladite au moins une seconde turbomachine étant commandée de manière complémentaire pour maintenir le régime de rotation de la voilure tournante au régime de rotation à une consigne de régime de rotation de la voilure tournante,
- un moyen (5) d'activation d'un indicateur d'une anomalie moteur pour le pilote l'invitant à l'utilisation d'un pilotage prudent, et
- un moyen (6) d'armement d'un limiteur de puissance configuré pour limiter la puissance des turbomachines de l'aéronef à au moins un premier seuil de puissance maximale disponible (OEIH) correspondant à une puissance maximale utilisable par une turbomachine pendant une première durée limitée.

9. Aéronef à voilure tournante comprenant au moins deux turbomachines et une unité de commande électronique selon la revendication 8.

## Patentansprüche

1. Verfahren zur automatisierten Steuerung des Turbomaschinen eines Luftfahrzeugs mit Drehflügeln, das mit mehreren Turbomaschinen versehen ist, während eines Defekts an einer Turbomaschine, wobei das Verfahren dazu bestimmt ist, von einer elektronischen Steuereinheit umgesetzt zu werden, die dazu ausgestaltet ist, einen Sollwert für die Drehzahl der Drehflügel zu erhalten,
**dadurch gekennzeichnet, dass** auf die Erfassung eines Defekts an einer ersten Turbomaschine unter den Turbomaschinen des Luftfahrzeugs mit Drehflügeln folgend das Verfahren zur automatisierten Steuerung umfasst:
- eine Bestimmung (102) der Flugphase, in welcher sich das Luftfahrzeug befindet, anschließend, wenn sich das Luftfahrzeug in einer anderen Phase als in einer Startphase befindet,
- eine Aktivierung (110) des Betriebs der Turbomaschinen in einem nicht synchronisierten Modus durch einen Befehl (112) zur progressiven Absenkung der Leistung der ersten Turbomaschine und einen Befehl (114) zur progressiven Erhöhung der Leistung zumindest einer zweiten Turbomaschine des Luftfahrzeugs, wobei die progressive Absenkung der Leistung der ersten Turbomaschine und die progressive Erhöhung der Leistung der zumindest einen zweiten Turbomaschine auf komplementäre Weise gesteuert werden, um die Drehzahl der Drehflügel auf dem Sollwert für die Drehzahl der Drehflügel zu halten,
- eine Aktivierung (120) einer Anzeige für den Piloten über eine Motoranomalie, die sich auf den erfassten Defekt bezieht, um den Piloten zu einer vorsichtigen Flugweise anzuhalten, und
- die Anstellung (130) eines Leistungsbegrenzers, der dazu ausgestaltet ist, die Leistung der Turbomaschinen des Luftfahrzeugs auf eine erste maximal verfügbare Leistungsschwelle (OEIH) zu begrenzen, die einer maximalen von einer ersten Turbomaschine verwendbaren Leistung während einer ersten begrenzten Dauer entspricht.

2. Verfahren zur automatisierten Steuerung nach Anspruch 1, wobei eine Startphase erfasst wird, wenn die von zumindest einer Turbomaschine gelieferte Leistung höher als eine maximale Dauerleistungsschwelle ist.

3. Verfahren zur automatisierten Steuerung nach einem der Ansprüche 1 oder 2, ferner umfassend, vor der Aktivierung des Betriebs der Turbomaschinen in einem nicht synchronisierten Modus, eine Überprüfung (100) des Betriebszustands aller Turbomaschinen, wobei der nicht synchronisierte Betrieb inaktiv gehalten wird, wenn ein Defekt, der den Normalbetrieb zumindest einer Turbomaschine beeinträchtigt, erfasst wird.

4. Verfahren zur automatisierten Steuerung nach einem der Ansprüche 1 bis 3, wobei die progressive Absenkung der Leistung der ersten Turbomaschine und die progressive Erhöhung der Leistung zumindest einer zweiten Turbomaschine des Luftfahrzeugs durchgeführt werden, bis die Leistung der ersten Turbomaschine eine untere Leistungsschwelle erreicht (116), wobei die Leistung der zumindest einen zweiten Turbomaschine unter einer zweiten maximal verfügbaren Leistungsschwelle (OEIL) bleibt, oder bis die Leistung der zumindest einen zweiten Turbomaschine die zweite maximal verfügbare Leistungsschwelle (OEIL) erreicht, wobei die Leistung der ersten Turbomaschine einen Wert aufweist, der höher ist als die untere Leistungsschwelle der ersten Turbomaschine.

5. Verfahren zur automatisierten Steuerung nach einem der Ansprüche 1 bis 4, wobei, wenn auf die Aktivierung des Betriebs der Turbomaschinen in einem nicht synchronisierten Modus folgend eine Aufforderung zur Erhöhung der Leistung erteilt (140), das Verfahren einen Befehl(142) zur Erhöhung der Leistung der zumindest einen zweiten Turbomaschine maximal bis zu einer zweiten maximal verfügbaren Leistungsschwelle (OEIL) umfasst, und wenn die Erhöhung der Leistung der zumindest einen zweiten Turbomaschine nicht ausreichend ist, damit die Turbomaschinen insgesamt die von dem Piloten geforderte Leistung entwickeln, einen Befehl zur Erhöhung (146) der Leistung der ersten Turbomaschine maximal bis zu der zweiten maximal verfügbaren Leistungsschwelle (OEIL), wobei die Erhöhung der Leistung an der zumindest einen zweiten Turbomaschine und falls erforderlich an der ersten Turbomaschine während einer begrenzten Dauer (150) durchgeführt werden.

6. Verfahren zur automatisierten Steuerung nach einem der Ansprüche 4 oder 5, wobei der Pilot eine Anstellung (160) eines Leistungsbegrenzers befiehlt, um die Leistung der Turbomaschinen des Luftfahrzeugs auf eine zweite maximal verfügbare Leistungsschwelle (OEIL) zu begrenzen, die einer maximalen Leistung entspricht, die während einer zweiten begrenzten Dauer, die höher ist als die erste begrenzte Dauer, von einer ersten Turbomaschine verwendet werden kann, wobei die zweite maximal verfügbare Leistungsschwelle (OEIL) niedriger ist als die erste maximal verfügbare Leistungsschwelle (OEIH).

7. Verfahren zur automatisierten Steuerung nach Anspruch 6, wobei, wenn auf die Aktivierung des Betriebs der Turbomaschinen in einem nicht synchronisierten Modus folgend ein Pilot eine Anforderung (240) zur Erhöhung der Leistung erteilt, das Verfahren einen Befehl (242) zur Erhöhung der Leistung der zumindest einen zweiten Turbomaschine maximal bis zu einer dritten maximal verfügbaren Leistungsschwelle (OEIC) umfasst, die niedriger ist als die zweite maximal verfügbare Leistungsschwelle (OEIL) ist, und wenn die Erhöhung der Leistung der zumindest einen zweiten Turbomaschine nicht ausreichend ist, damit die Turbomaschinen insgesamt die von dem Piloten geforderte Leistung entwickeln, einen Befehl (246) zur Erhöhung der Leistung der ersten Turbomaschine maximal bis zu der dritten maximal verfügbaren Leistungsschwelle (OEIC), wobei die Erhöhung der Leistung an der zumindest einen zweiten Turbomaschine und falls erforderlich an der ersten Turbomaschine während einer unbegrenzten Dauer (150) durchgeführt werden.

8. Elektronische Steuereinheit (1) für ein Luftfahrzeug mit Drehflügeln, das mit mehreren Turbomaschinen versehen ist, wobei die elektronische Steuereinheit (1) dazu ausgestaltet ist, einen Sollwert für die Drehzahl der Drehflügel zu erhalten und während eines Defekts an einer Turbomaschine auf automatisierte Weise die Turbomaschinen des Luftfahrzeugs zu steuern, wobei die elektronische Steuereinheit (1) umfasst:
- ein Eingangsmodul (2), das dazu ausgestaltet ist, Signale der Erfassung eines Defekts an einer ersten Turbomaschine unter den Turbomaschinen des Luftfahrzeugs mit Drehflügeln zu empfangen,
- ein Mittel (3) zur Bestimmung der Flugphase, in welcher sich das Luftfahrzeug befindet,
- ein Mittel (4) zur Aktivierung des Betriebs der Turbomaschinen in einem nicht synchronisierten Modus, das dazu ausgestaltet ist, wenn sich das Luftfahrzeug in einer anderen Phase als in einer Startphase befindet, einen Befehl zur progressiven Absenkung der Leistung der ersten Turbomaschine und einen Befehl zur progressiven Erhöhung der Leistung zumindest einer zweiten Turbomaschine des Luftfahrzeugs auszugeben, wobei die progressive Absenkung der Leistung der ersten Turbomaschine und die progressive Erhöhung der Leistung der zumindest einen zweiten Turbomaschine auf komplementäre Weise gesteuert werden, um die Drehzahl der Drehflügel auf dem Sollwert für die Drehzahl der Drehflügel zu halten,
- ein Mittel (5) zur Aktivierung einer Anzeige einer Motoranomalie für den Piloten, um diesen zu einer vorsichtigen Flugweise anzuhalten, und
- ein Mittel (6) zur Anstellung eines Leistungsbegrenzers, der dazu ausgestaltet ist, die Leistung der Turbomaschinen des Luftfahrzeugs auf zumindest eine erste maximal verfügbare Leistungsschwelle (OEIH) zu begrenzen, die einer maximalen, während einer ersten begrenzten Dauer von einer Turbomaschine verwendbaren Leistung entspricht.

9. Luftfahrzeug mit Drehflügeln, umfassend zumindest zwei Turbomaschinen und eine elektronische Steuereinheit nach Anspruch 8.

## Claims

1. An automated control method for the turbine engines of a rotary-wing aircraft provided with a plurality of turbine engines during a breakdown of one turbine engine, the method being intended to be implemented by an electronic control unit configured to receive a rotation speed setpoint of the rotary wing,
**characterized in that**, following detection of a breakdown of a first turbine engine among the turbine engines of the rotary-wing aircraft, the automated control method comprises:
- determining (102) the flight phase in which the aircraft is situated, then, when the aircraft is in a phase other than a takeoff phase,
- activating (110) operation of the turbine engines in a misaligned mode via commanding (112) a progressive reduction in the power of said first turbine engine and commanding (114) a progressive increase of the power of at least one second turbine engine of the aircraft, the progressive reduction in power of the first turbine engine and the progressive increase in power of said at least one second turbine engine being controlled in a complementary manner to maintain the rotation speed of the rotary wing at the wing rotation speed setpoint of the rotary wing,
- activating (120) an indicator, for the pilot, of an engine anomaly related to the detected breakdown, inviting him to employ prudent piloting, and
- setting (130) a power limiter configured to limit the power of the turbine engines of the aircraft to a first maximum available power threshold (OEIH) corresponding to a maximum power usable by a turbine engine for a first limited period.

2. The automated control method according to claim 1, wherein a takeoff phase is detected when the power delivered by at least one turbine engine is greater than a continuous maximum power threshold.

3. The automated control method according to one of claims 1 or 2, also comprising, prior to activating operation of the turbine engines in a misaligned mode, verification (100) of the operating state of all turbine engines, the misaligned mode being held inactive if a breakdown impacting the nominal operation of at least one turbine engine is detected.

4. The automated control method according to one of claims 1 to 3, wherein the progressive reduction in power of said first turbine engine and the progressive increase of in power of at least one second turbine engine of the aircraft are accomplished until the power of the first turbine engine reaches (116) a lower power limit, the power of said at least one second turbine engine remaining less than a second maximum available power threshold (OEIL), or until the power of said at least one second turbine engine reaches the second maximum available power threshold (OEIL), the power of said first turbine engine having a value greater than said lower power limit of the first turbine engine.

5. The automated control method according to one of claims 1 to 4, wherein if, following the activation of operation of the turbine engines in a misaligned mode, a pilot issues a power increase request (140), the method comprises a power increase command (140), the method comprises a command (142) to increase the power of said at least one turbine engine until, at most, a second maximum available power threshold (OEIL), and, if the increase of power of said at least one second turbine engine is insufficient for the turbine engines to develop in total the power required by the pilot, a command (146) for increasing the power of said first turbine engine until, at most, the second maximum available power threshold (OEIL), the increase in power on said at least one second turbine engine, and, if needed, of said first turbine engine being accomplished for a limited period (150).

6. The automated control method according to one of claims 4 or 5, wherein the pilot commands the setting (160) of a power limiter to limit the power of the turbine engines of the aircraft to a second maximum available power threshold (OEIL) corresponding to a maximum power usable by a turbine engine for a second limited period greater than the first limited period, the second maximum available power threshold (OEIL) being less than the first maximum available power threshold (OEIH).

7. The automated control method according to claim 6, wherein if, following the activation of operation of the turbine engines in a misaligned mode, a pilot issues a power increase request (240), the method comprises a command (242) to increase the power of said at least one second turbine engine until, at most, a third maximum available power threshold (OEIC) less than the second maximum available power (OEIL), and, if the power increase of said at least one second turbine engine is insufficient for the turbine engines to develop in total the power required by the pilot, a command (246) to increase the power of said first turbine engine until, at most, the third maximum available power threshold (OEIC), the power increase in said at least one second turbine engine and, if needed, in said first turbine engine which can be accomplished for an unlimited period.

8. An electronic control unit (1) for a rotary-wing aircraft provided with a plurality of turbine engines, the electronic control unit (1) being configured to receive a rotation speed setpoint of the rotary wing and automatically control the turbine engines of the aircraft during a breakdown of one turbine engine, the electronic control unit (1) comprising:
- an input module (2) configured to receive signals detecting a breakdown in a first turbine engine among the turbine engines of the rotary wing aircraft,
- a means (3) for determining the flight phase in which the aircraft is situated,
- a means (4) for activating operation of the turbine engines in a misaligned mode configured to deliver, when the aircraft is in a phase other than a takeoff phase, a command to progressively reduce the power of said first turbine engine and a command to progressively increase the power of at least one second turbine engine of the aircraft, the progressive reduction in power of the first turbine engine and the progressive increase in power of said at least one second turbine engine being controlled in a complementary manner to maintain the rotation speed of the rotating wing at the rotation speed of the rotation speed setpoint of the rotary wing,
- a means (5) for activating an indicator of an engine anomaly for the pilot, inviting him to employ prudent piloting, and
- a means (6) for setting a power limiter configured to limit the power of the turbine engines of the aircraft to at least a first maximum available power threshold (OEIH) corresponding to a maximum power usable by a turbine engine for a first limited period.

9. A rotary wing aircraft comprising at least two turbomachines and an electronic control unit according to claim 8.
